# EUROPÄISCHE PATENTANMELDUNG

(11) **EP 2 589 950 A1**
(43) Veröffentlichungstag der Anmeldung: **08.05.2013**
(21) Anmeldenummer: 12191117.6
(22) Anmeldetag: 02.11.2012
(51) Int. Cl.: G01N 21/13, G01N 21/25, G01N 21/64, G01N 35/02, G01N 35/00, C12M 1/34, G01N 33/52

(54) **Probenanalysevorrichtung zum Bestimmen von Proben in einer Probenmatrix und Verfahren zum Bestimmen von Proben in einer oder mehreren Probenmatrizen**

(30) Priorität: 04.11.2011 DE 102011055070
(71) Anmelder: Seramun Diagnostica GmbH, 15754 Heidesee OT Wolzig (DE)
(72) Erfinder: Porstmann, Tomas, 15754 Heidesee OT Wolzig (DE); Löster, Klemens, 16562 Hohen Neuendorf OT Bergfelde (DE); Höchel, Erik, 10439 Berlin (DE); Lorenz, Christoph, 65189 Wiesbaden (DE); Pas, Peter, 12557 Berlin (DE)
(74) Vertreter: Bittner, Thomas L.

(57) **Zusammenfassung**

Die Erfindung betrifft eine Probenanalysevorrichtung zum Bestimmen von Proben in einer Probenmatrix mit mehreren Probevolumen, insbesondere in einer Mikrotiterplatte, mit einer Aufnahmeeinrichtung mit einer Aufnahme für eine Probenmatrix, die mehrere Probevolumen aufweist, einer ersten Messeinrichtung, die konfiguriert ist, Proben in der Probenmatrix, wenn diese in der Aufnahme angeordnet ist, mittels einer Nass- oder Feuchtmessung zu bestimmen, einer zweiten Messeinrichtung, die konfiguriert ist, weitere Proben in der Probenmatrix, die von den Proben verschieden sind, oder in einer anderen Probenmatrix, wenn diese in der Aufnahme angeordnet ist, mittels einer Trockenmessung zu bestimmen, und einer Verlagerungseinrichtung, die an die Aufnahmeeinrichtung koppelt und konfiguriert ist, die Aufnahmeeinrichtung zwischen einer Ladestellung und mehreren Messstellungen zu verlagern, derart, dass die Aufnahme in verschiedene Messstellungen verlagerbar ist, die entweder der ersten oder der zweiten Messeinrichtung zugeordnet sind. Weiterhin ist ein Verfahren zum Bestimmen von Proben in einer oder mehreren Probenmatrizen geschaffen, die jeweils mit mehreren Probevolumen gebildet sind.

## Beschreibung

Die Erfindung betrifft eine Probenanalysevorrichtung zum Bestimmen von Proben in einer Probenmatrix mit mehreren Probevolumen, insbesondere in einer Mikrotiterplatte, sowie ein Verfahren zum Bestimmen von Proben in einer oder mehreren Probenmatrizen, die jeweils mit mehreren Probevolumen gebildet sind.

### Hintergrund der Erfindung

Derartige Technologien dienen zum Bestimmen von zu untersuchenden Substanzen, beispielsweise Körperflüssigkeiten, wobei die zu untersuchenden Substanzen für die Analyse in einer Anordnung eingebracht werden, die mehrere Probevolumen zur Aufnahme der zu bestimmenden Substanzen aufweist, beispielsweise in Form von Näpfchen. Die in der Probenmatrix aufgenommenen Substanzproben können dann mit verschiedenen Analyseverfahren bestimmt werden, beispielsweise zu medizindiagnostischen Zwecken.

Eine bekannte Form solcher Probenmatrizen ist die Mikrotiterplatte, zum Beispiel mit 96 oder 384 Probenvolumina. Diese besteht regelmäßig aus einem Kunststoffmaterial. Es ist eine matrizenartige Anordnung von Probevolumen oder Näpfchen gebildet, die jeweils geeignet sind, separat eine Substanzprobe aufzunehmen. Hierbei können mehrere Proben ein und derselben zu bestimmenden Substanz oder auch Proben unterschiedlicher Substanzen in einer Mikrotiterplatte aufgenommen werden.

Die Probenmatrix wird dann mit Hilfe von Analyseeinrichtungen untersucht. Aus dem Dokument DE 20 2008 009 859 U1 ist eine Vorrichtung bekannt, die dazu dient, eine solche Probenmatrix spektroskopisch zu untersuchen. Als Messgrößen können die Lumineszenz- und / oder die Fluoreszenzstrahlung gemessen werden. Auch im Dokument WO 01/04608 A1 werden Probenmatrizen optisch untersucht.

Weiterhin betrifft das Dokument DE 37 36 632 C2 eine Vorrichtung zur Analyse von Proben in einer Probenmatrix. In einer Ausgestaltung der Vorrichtung weist diese zwei Bearbeitungslinien auf, was es ermöglicht, zwei verschiedene Messungen gleichzeitig durchzuführen.

Aus dem Dokument EP 0 569 215 A2 ist eine Analysevorrichtung bekannt, bei der eine Messprobe mit Hilfe einer oder mehrerer Messverfahren untersucht wird, die ihrerseits aus mehreren unterschiedlichen Messverfahren ausgewählt sind, welche mit der selben Messvorrichtung durchgeführt werden können.

Im Dokument US 4,528,159 A ist ein automatisiertes Instrumentensystem zum Analysieren einer Patientenprobe offenbart.

### Zusammenfassung der Erfindung

Aufgabe der Erfindung ist es, eine verbesserte Probenanalysevorrichtung zum Bestimmen von Proben in einer Probenmatrix sowie ein Verfahren zum Bestimmen von Proben in einer oder mehreren Probenmatrizen anzugeben, mit denen das Analysieren einer Vielzahl von Einzelproben einer oder mehrerer zu analysierender Substanzen in einer Probenmatrix effizienter und für den Nutzer mit geringerem Aufwand ausfiihrbar ist.

Diese Aufgabe wird erfindungsgemäß durch eine Probenanalysevorrichtung zum Bestimmen von Proben in einer Probenmatrix mit mehreren Probevolumen nach dem unabhängigen Anspruch 1 sowie ein Verfahren zum Bestimmen von Proben in einer oder mehreren Probenmatrizen, die jeweils mit mehreren Probevolumen gebildet sind, nach dem unabhängigen Anspruch 9 gelöst. Vorteilhafte Ausgestaltungen der Erfindung sind Gegenstand von abhängigen Unteransprüchen.

Nach einem Aspekt der Erfindung ist eine Probenanalysevorrichtung zum Bestimmen von Proben in einer Probenmatrix mit mehreren Probevolumen, insbesondere in einer Mikrotiterplatte, mit folgenden Merkmalen geschaffen:
- einer Aufnahmeeinrichtung mit einer Aufnahme für eine Probenmatrix, die mehrere Probevolumen aufweist,
- einer ersten Messeinrichtung, die konfiguriert ist, Proben in der Probenmatrix, wenn diese in der Aufnahme angeordnet ist, mittels einer Nass- oder Feuchtmessung zu bestimmen,
- einer zweiten Messeinrichtung, die konfiguriert ist, weitere Proben in der Probenmatrix, die von den Proben verschieden sind, oder in einer anderen Probenmatrix, wenn diese in der Aufnahme angeordnet ist, mittels einer Trockenmessung zu bestimmen, und
- einer Verlagerungseinrichtung, die an die Aufnahmeeinrichtung koppelt und konfiguriert ist, die Aufnahmeeinrichtung zwischen einer Ladestellung und mehreren Messstellungen zu verlagern, derart, dass die Aufnahme in verschiedene Messstellungen verlagerbar ist, die entweder der ersten oder der zweiten Messeinrichtung zugeordnet sind.

Nach einem weiteren Aspekt der Erfindung ist ein Verfahren zum Bestimmen von Proben in einer oder mehreren Probenmatrizen, die jeweils mit mehreren Probevolumen gebildet sind, in einer Probenanalysevorrichtung geschaffen, wobei das Verfahren die folgenden Schritte aufweist:
- Beladen einer Aufnahmeeinrichtung mit einer Aufnahme in einer Ladestellung mit einer Probenmatrix, die mehrere Probevolumen aufweist,
- Verlagern der Aufnahmeeinrichtung mit der Probenmatrix in der Aufnahme mittels einer Verlagerungseinrichtung in erste Messstellungen, die einer ersten Messeinrichtung zugeordnet sind,
- Bestimmen von Proben in der Probenmatrix in einer Nass- oder Feuchtmessung mittels der ersten Messeinrichtung in den ersten Messstellungen,
- Verlagern der Aufnahmeeinrichtung mit der Probenmatrix in der Aufnahme mittels der Verlagerungseinrichtung in zweite Messstellungen, die einer zweiten Messeinrichtung zugeordnet sind, die von der ersten Messeinrichtung verschieden ist, und
- Bestimmen von weiteren Proben, die von den Proben verschieden sind, in der Probenmatrix oder in einer anderen, nachträglich und wahlweise anstelle der Probenmatrix in der Aufnahme angeordneten Probenmatrix in einer Trockenmessung mittels der zweiten Messeinrichtung in den zweiten Messstellungen.

Mit der Erfindung ist die Möglichkeit geschaffen, Probenmatrizen, die eine flächige Anordnung von mehreren Probevolumen aufweisen, welche jeweils individuell, d. h. getrennt voneinander eine zu bestimmende Substanz aufnehmen können. Bei den zu bestimmenden Substanzen handelt es sich regelmäßig um Analyte in Flüssigkeiten, beispielsweise Körperflüssigkeiten. Nach dem Einbringen der Flüssigkeiten in das Probevolumen und / oder in die Probevolumen werden diese vorzugsweise einer Festphasenseparation unterzogen, und die zu bestimmenden Analyten werden behandelt, beispielsweise dadurch, dass eine Farbreaktion ausgelöst wird. Beispielsweise können die Behandlung mit einem Enzym-markierten Detektionssystem erfolgen und ein Festphasenimmunoassay oder ein Festphasenhybridisierungsassay durchgeführt werden.

In Abhängigkeit von der oder den durchgeführten Analysen für die zu bestimmenden Proben umfasst die Probenmatrix dann Nass- oder Feuchtproben und / oder Trockenproben. Die Nass- oder Feuchtproben sind dadurch charakterisiert, dass in dem zugeordneten Probevolumen eine Flüssigkeitsprobe angeordnet ist. Demgegenüber ist das Probevolumen einer Trockenprobe trocken, also frei von Flüssigkeit. Hier wurde das Probevolumen vor der anstehenden Probenbestimmung ausgetrocknet, zum Beispiel nach einer Analysereaktion. Es verbleibt im getrockneten Probevolumen ein analysierbares Ergebnis der Analysereaktion, beispielsweise in Form einer oder mehrerer gefärbter Mess- oder Analysefelder am Boden des Probevolumens.

Mit der Erfindung ist es nun ermöglicht, in ein und derselben Probenanalysevorrichtung sowohl die Nass- oder Feuchtproben mittels einer Nass- oder Feuchtmessung unter Verwendung einer ersten Messeinrichtung als auch die Trockenproben mittels einer Trockenmessung unter Verwendung einer zweiten Messeinrichtung, die von der ersten Messeinrichtung verschieden ist, zu bestimmen. Zur Durchführung der unterschiedlichen Messungen wird die Probenmatrix in Messstellungen gebracht, die jeweils entweder der ersten oder der zweiten Messeinrichtung zugeordnet sind, derart, dass es sich um Stellungen der Aufnahme mit der Probenmatrix handelt, in denen dann eine oder mehrere gewünschten Probevolumen mit der jeweiligen Messeinrichtung vermessen werden können. Hierbei kann vorgesehen sein, dass für eine in der Aufnahme der Aufnahmeeinrichtung aufgenommene Probenmatrix ausschließlich Nass- oder Feuchtmessungen oder ausschließlich Trockenmessungen ausgeführt werden. Aber auch die Nutzung sowohl der Nass- oder Feuchtmessung als auch der Trockenmessung für ein und dieselbe Probenmatrix kann vorgesehen sein. In diesem Zusammenhang sieht eine bevorzugte Ausführungsform vor, dass im Rahmen der Ausführung einer ersten Messart, also entweder der Nass- / Feuchtmessung oder der Trockenmessung, bei der Auswertung der Messergebnisse geprüft wird, ob für die selbe Probenmatrix noch die Durchführung der zweiten Messart notwendig ist. Beispielsweise können die Messergebnisse der Nass- oder Feuchtmessung dahingehend ausgewertet werden, ob eine ausreichende Messgenauigkeit gegeben ist. Wenn dieses nicht der Fall ist, kann dann zusätzlich die Trockenmessung durchgeführt werden. Auf diese Weise wäre beispielsweise ein Messregime ausfiihrbar, welches für dieselbe oder unterschiedliche Substanzen in Abhängigkeit vom Ergebnis einer ersten Messart wahlweise die zweite Messart zur Bestimmung heranzieht.

In einer Fortbildung kann vorgesehen sein, dass die Probenanalysevorrichtung einen Justiermechanismus für die verschiedenen Messstellungen aufweist, welcher mittels geeigneter Hardware- und / oder Softwarekomponenten implementiert. Hierbei wird die Aufnahme mit der Probenmatrix zunächst mit Hilfe der Verlagerungseinrichtung in einen Messstellungsbereich der jeweiligen Messeinrichtung gebracht. Um nun das aktuell zu untersuchende Probevolumen in die korrekte Messstellung zu bringen, prüft der Justiermechanismus, ob die korrekte Messstellung bereits eingenommen ist. Dieses kann beispielsweise dadurch ausgeführt werden, dass eine photometrische Aufnahme des Probevolumens mit Hilfe einer Kamera gemacht wird und die Aufnahme mittels Bildanalyse ausgewertet wird. So kann auf diese Weise zum Beispiel die Lage von Messbereichen oder -feldern am Boden des Probevolumens und /oder einer Justierhilfe am Probevolumen geprüft werden, um anschließend mit Hilfe des Justiermechanismus gegebenenfalls zum Einnehmen der korrekten Messstellung in Bezug auf die zugeordnete Messeinrichtung nachzujustieren, wofür dann bevorzugt die Verlagerungseinrichtung angesteuert wird.

Eine bevorzugte Weiterbildung der Erfindung sieht vor, dass die erste und / oder die zweite Messeinrichtung als eine optische Messeinrichtung gebildet sind. Mit Hilfe der Messeinrichtungen können zum Beispiel folgende optische Messverfahren genutzt werden: Absorptionsmessung, Fluoreszenzmessung, Phosphoreszenzmessung und / oder Extinktionsmessung. Auch kann das dynamische Verhalten der untersuchten Probe in einer Ausführungsform untersucht werden, zum Beispiel mittels Messen einer zeitabhängigen Extinktionsänderung oder einer Fluoreszenzabklingzeit. In einer Ausgestaltung der Probenanalysevorrichtung wird bei der Nass- oder Feuchtmessung die Extinktion / Absorption der Nass- oder Feuchtprobe im Durchlicht gemessen. Hierzu wird das aktuell untersuchte Probevolumen von einer Seite mit einem Messlichtstrahl beleuchtet. Auf der gegenüberliegenden Seite wird dann mit Hilfe eines Photodetektors das durch das Probevolumen durchgehende Licht erfasst, um es zum Beispiel spektralabhängig und / oder hinsichtlich der durchgehenden Lichtintensität zu untersuchen. Die Trockenmessung wird bei dieser Ausführungsform als photometrische Messung ausgeführt, derart, dass von dem Probenvolumen, insbesondere dem Boden des Probevolumens, ein optisches Bild erfasst wird, zum Beispiel mittels einer Kamera, welches anschließend einer softwaretechnischen Bildanalyse zugeführt wird. Auf diese Weise ist beispielsweise eine unterschiedliche Färbung von Messspots oder -feldern am Boden des ausgetrockneten Probevolumens möglich. In Verbindung mit den unterschiedlichen Messverfahren kann vorgesehen sein, dass auf das zu untersuchende Probevolumen eingestrahlte Licht mit Hilfe einer oder mehrerer lichtemittierender Dioden (LED) bereitzustellen. Im Zusammenhang mit der photometrischen Messung kann so zum Beispiel eine LED-Matrix verwendet werden, um eine möglichst gleichmäßige Ausleuchtung des Probevolumens für die Bildaufnahme zu erzeugen.

Bei einer zweckmäßigen Ausgestaltung der Erfindung kann vorgesehen sein, dass die Verlagerungseinrichtung konfiguriert ist, innerhalb einer Matrixanordnung von Probenvolumen, die bei der Probenmatrix und / oder bei der anderen Probenmatrix gebildet ist, für eine erste Gruppe von Probevolumen Messstellungen, die der Nass- oder Feuchtmessung mit der ersten Messeinrichtung zugeordnet sind, und für eine zweite Gruppe von Probenvolumen, die von der ersten Gruppe von Probevolumen verschieden ist, andere Messstellungen anzufahren, die der Trockenmessung mit der zweiten Messeinrichtung zugeordnet sind. Bei dieser Ausführungsform werden für die Bestimmung von Proben innerhalb einer Matrixanordnung mit nxm (n, m > 0) Probevolumen sowohl die Nass- oder Feuchtmessung als auch die Trockenmessung eingesetzt, indem jeweils zugeordnete Messstellungen mit Hilfe der Verlagerungseinrichtung angefahren werden. Im einfachsten Fall kann es sich auch um eine Matrixanordnung mit genau zwei Probevolumen handeln, von denen ein Probevolumen mit der ersten Messeinrichtung im Rahmen einer Nass- oder Feuchtmessung und das andere Probevolumen mit der zweiten Messeinrichtung im Rahmen einer Trockenmessung bestimmt werden. Üblicherweise wird die Matrixanordnung jedoch eine größere Anzahl von matrixartig angeordneten Probevolumen aufweisen. Diese Matrixanordnung umfasst dann eine erste Gruppe von Probevolumen, nämlich Nass- oder Feuchtproben, sowie eine hiervon verschiedene zweite Gruppe von Probevolumen, bei denen es sich um Trockenproben handelt. Die unterschiedlichen Probevolumen werden dann mit Hilfe der jeweils der Probenart zugeordneten Messeinrichtung bestimmt.

Eine vorteilhafte Ausführungsform der Erfindung sieht vor, dass Verlagerungseinrichtung mit einer x-y-Verlagerungseinheit gebildet ist.

Bevorzugt sieht eine Fortbildung der Erfindung eine Ausleseeinrichtung vor, die konfiguriert ist, Nutzungsinformationen von einem Informationsspeicher auf der Probenmatrix kontaktlos auszulesen. Bei dem Informationsspeicher auf der Probenmatrix kann es sich zum Beispiel um einen optisch auslesbaren Strichcode oder einen RFID-Transponder (RFID - *Radio Frequency Identification*) handeln. Auch eine Kombination derartiger Informationsspeicher kann vorgesehen sein. Mit Hilfe des Informationsspeichers können beliebige Nutzungsinformationen zum kontaktlosen Auslesen in der Probeanalyseeinrichtung zur Verfügung gestellt werden.

Bei einer vorteilhaften Ausgestaltung der Erfindung kann eine Prüfeinrichtung vorgesehen sein, die an die Ausleseeinrichtung funktionell koppelt und konfiguriert ist, die ausgelesenen Nutzungsinformationen auszuwerten, derart, dass das Bestimmen von Proben der Probenmatrix unterbunden wird, wenn beim Auswerten der Nutzungsinformationen festgestellt wird, dass es sich um eine nicht zugelassene Probenmatrix handelt. Hierdurch wird sichergestellt, dass die Probenanalysevorrichtung ausschließlich mit hierfür zugelassenen Probematrizen betrieben wird. Auf diese Weise wird beispielsweise verhindert, dass die Probenanalysevorrichtung aufgrund der Nutzung nicht zugelassener Probematrizen gerätetechnisch beschädigt wird. Auch wird sichergestellt, dass die Messergebnisse nicht aufgrund der Verwendung nicht zugelassener Probematrizen verfälscht sind.

Bei einer vorteilhaften Ausgestaltung der Erfindung kann eine Messsteuereinrichtung vorgesehen sein, die an die Ausleseeinrichtung sowie die erste und / oder die zweite Messeinrichtung funktionell koppelt und konfiguriert ist, die ausgelesenen Nutzungsinformationen auszuwerten, derart, dass das Bestimmen der Proben in der Probenmatrix mittels der ersten und /oder der zweiten Messeinrichtung Messregimeinformationen entsprechend ausgeführt wird, die von der Messsteuereinrichtung aus den ausgelesenen Nutzungsinformationen abgeleitet werden. Die Nutzungsinformationen umfassen bei dieser Ausgestaltung Informationen darüber, welches Probevolumen auf der Probenmatrix welcher Messeinrichtung zugeordnet ist. Dieses kann für ein oder mehrere der Probevolumen auf der Matrix vorgesehen sein. Die Messsteuereinrichtung, wahlweise im Zusammenwirken mit der Steuereinrichtung der Analysevorrichtung, stellt in Auswertung dieser Nutzungsinformationen dann mit Hilfe entsprechender Ansteuersignale sicher, dass das jeweilige Probevolumen mit Hilfe der Verlagerungseinrichtung in die zugeordnete Messstellung gelangt und hierauf die Nass- oder Feucht- oder die Trockenmessung ausgeführt wird. Die Nutzungsinformation bestimmt also, welches Probevolumen (Näpfchen) der Probenmatrix welchem Messvorgang zugeführt wird. Auch kann vorgesehen sein, dass aus der Nutzungsinformation sich eine Reihenfolge ableitet, in der die Probevolumen der ersten und / oder der zweiten Messeinrichtung zugeführt werden.

Eine bevorzugte Weiterbildung der Erfindung sieht eine Messprüfeinrichtung vor, die an die erste und / oder die zweite Messeinrichtung funktionell koppelt und konfiguriert ist, vor, während und / oder nach der Nass- oder Feuchtmessung mit der ersten Messeinrichtung und / oder der Trockenmessung mit der zweiten Messeinrichtung zu prüfen, ob eine aktuell bestimmte Probe für die jeweilige Messart zugelassen ist. Um zu vermeiden, dass beispielsweise eine Trockenprobe mittels der Nass- oder Feuchtmessung mit der ersten Messeinrichtung bestimmt wird, sieht diese Ausgestaltung eine Messprüfeinrichtung vor, die im Zusammenhang mit einer ausgeführten Messung prüft, ob die aktuell untersuchte Probe mit der korrekten Messart bestimmt wird. So kann beispielsweise eine Bildaufnahme des Probevolumens dahingehend analysiert werden, ob erwartete Messfelder am Boden des Probevolumens grundsätzlich erfasst werden konnten. Wenn dieses nicht der Fall ist, kann der Grund beispielsweise darin liegen, dass es sich um eine Nass- oder Feuchtprobe handelt, bei der also eine Flüssigkeit in dem Probevolumen angeordnet ist.

In Verbindung mit dem Verfahren zum Bestimmen von Proben in einer oder mehreren Probenmatrizen können die vorangehend im Zusammenhang mit der Probenanalysevorrichtung beschriebenen Ausgestaltungen entsprechend vorgesehen sein.

Das Verfahren zum Bestimmen von Proben kann in einer Ausführung vorsehen, dass bei der Nass- oder Feuchtmessung mittels der ersten Messeinrichtung und / oder bei der Trockenmessung mittels der zweiten Messeinrichtung wenigstens ein Analyseparameter aus der folgenden Gruppe bestimmt wird: Autoantikörper, Antikörper gegen Infektionserreger und Antigene von Infektionserregern. Es können insbesondere Parameter in Verbindung mit Festphasenenzymimmuntechniken oder Festphasenhybridisierungstechniken bestimmt werden.

### Beschreibung bevorzugter Ausführungsbeispiele der Erfindung

Die Erfindung wird im Folgenden anhand von bevorzugten Ausführungsbeispielen unter Bezugnahme auf Figuren einer Zeichnung näher erläutert. Hierbei zeigen:
Fig. 1 eine schematische Darstellung einer Probenanalysevorrichtung zum Bestimmen von Proben in einer Probenmatrix mit mehreren Probevolumen und
Fig. 2 eine Bildaufnahme für eine Trockenprobe.

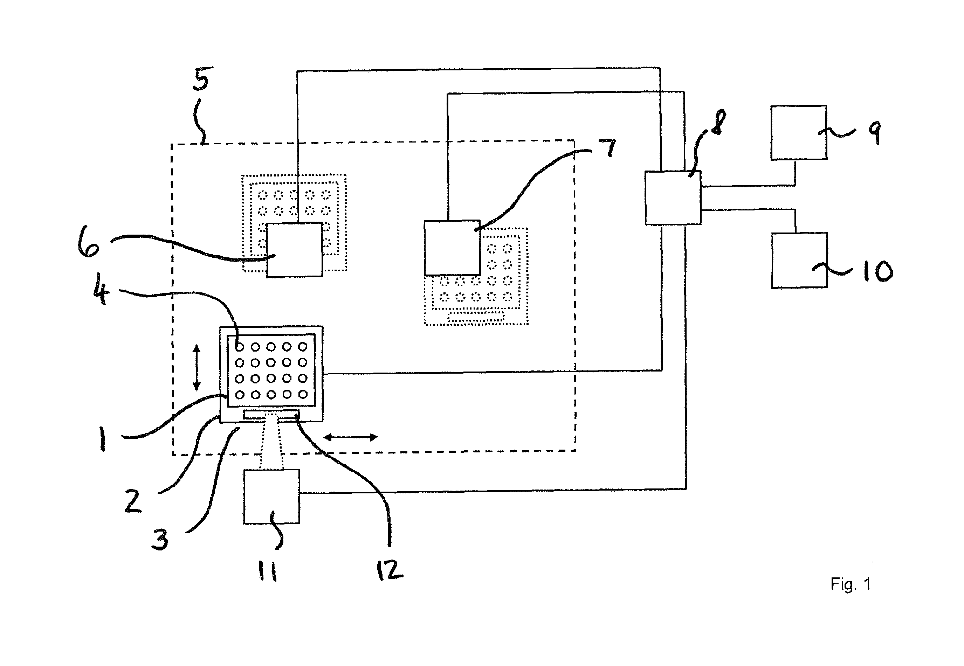

Fig. 1 zeigt eine schematische Darstellung einer Probenanalysevorrichtung, bei der eine Probenmatrix 1 in einer Aufnahme 2 einer Verlagerungseinrichtung 3 angeordnet ist. Mit Hilfe der Verlagerungseinrichtung 3 ist die Probenmatrix 1, welche eine Anordnung von Probevolumen 4 aufweist, in einem Verlagerungsbereich 5 verlagerbar. Auf diese Weise kann die Probenmatrix 1 zwischen einer in Fig. 1 dargestellten Ladestellung und mehreren Stellungen im Verlagerungsbereich bewegt werden, so dass insbesondere Messstellungen eingenommen werden können, in denen die Probenmatrix 1 in Stellungen angeordnet ist, die einer ersten oder einer zweiten Messeinrichtung 6, 7 zugeordnet sind, was in Fig. 1 mittels gestrichelter Linien dargestellt ist.

Die in Fig. 1 dargestellte Probenanalysevorrichtung umfasst weiterhin eine Steuereinrichtung 8, die nicht nur an die beiden Messeinrichtungen 6, 7, sondern auch an eine Anzeigeeinrichtung 9 sowie eine Eingabeeinrichtung 10 koppelt, bei der es sich beispielsweise um eine Eingabetastatur oder ein Eingabefeld handelt. Weitere Systemkomponenten können an die Steuereinrichtung und / oder die anderen Einrichtungen koppeln, zum Beispiel eine Datenschnittstelle (nicht dargestellt).

Darüber hinaus koppelt die Steuereinrichtung 8 gemäß Fig. 1 an die Verlagerungseinrichtung 3 sowie eine Ausleseeinrichtung 11. Mit Hilfe der Ausleseeinrichtung 11 ist eine Speichereinrichtung 12, die auf der Probenmatrix 1 angeordnet ist, kontaktlos auslesbar, beispielsweise ein Strichcode mittels optischer Auslesung. In einer alternativen Ausgestaltung kann die Speichereinrichtung 12 mit einem RFID-Chip gebildet sein.

Auf diese Weise ausgelesene Nutzungsinformation kann dann in der Steuereinrichtung 9 für den Messbetrieb ausgewertet werden. Beispielsweise kann anhand der ausgelesenen Nutzungsinformation geprüft werden, ob es sich bei der Probenmatrix 1 um eine Probenmatrix handelt, die für die Probenanalysevorrichtung zugelassen ist. Wenn dieses nicht der Fall ist, wird von der Steuereinrichtung 8 die weitere Handhabung der eingelegten Probenmatrix 1 in der Probenanalysevorrichtung blockiert. In diesem Zusammenhang kann dann vorgesehen sein, dass von der Steuereinrichtung 8 ein Warn- oder Informationshinweis an den Nutzer über die Anzeigeeinrichtung 9 ausgegeben wird.

Auch kann in Verbindung mit der Nutzungsinformation vorgesehen sein, dass diese Messinformationen enthält, aus denen sich ergibt, welche der Probevolumen 4 (Näpfchen) der Probenmatrix 1 für eine bestimmte Art der Analyse oder Messung vorgesehen sind. So kann die Nutzungsinformation angeben, dass eine erste Reihe oder Spalte der Matrix von Probevolumen 4 der ersten Messeinrichtung 6 zugeordnet ist, wohingegen eine zweite Reihe oder Spalte der Probevolumen 4 mit der zweiten Messeinrichtung 7 auszuwerten ist. Diese Information kann dann von der Steuereinrichtung 8 genutzt werden, um die Verlagerungseinrichtung 3 sowie die Messeinrichtungen 6, 7 beim Bestimmen der Proben, die in der Probenmatrix 1 aufgenommen sind, zu steuern.

Mit Hilfe von Software- und Hardwarekomponenten, die wahlweise zumindest teilweise in die Steuereinrichtung 8 integrierbar sind, können darüber hinaus weitere Funktionseinrichtungen oder -komponenten der Probenanalysevorrichtung implementiert werden. Hierzu gehört beispielsweise eine Justierapplikation, dahingehend, dass zum Beispiel eine Feinjustierung der Probenmatrix 1 in der Messstellung in Bezug auf die jeweilige Messeinrichtung ausgeführt wird.

Bei der dargestellten Ausführungsform handelt es sich bei der ersten Messeinrichtung 6 um eine Messeinrichtung, die konfiguriert ist, eine Extinktions- und / oder Absorptionsmessung für die zu bestimmende Probe durchzuführen. Hierzu wird ein Messlichtstrahl auf die zu untersuchende Probe, bei der es sich um eine Nass- oder Feuchtprobe handelt, auf das entsprechende Probevolumen gegeben und anschließend das durch die Probe hindurch gelangte Licht mit Hilfe eines Photodetektors erfasst, um es auszuwerten, beispielsweise hinsichtlich seiner spektralen Verteilung und / oder seiner Intensität im Vergleich zu dem eingestrahlten Messlichtstrahl. Mit der ersten Messeinrichtung 6 ist also eine Nass- oder Feuchtmessung für eine Nass- oder Feuchtprobe durchführbar, welche dadurch charakterisiert ist, dass in den zugeordneten Probevolumen 4 eine Flüssigkeitsprobe der zu analysierenden Substanz angeordnet ist.

Demgegenüber ist die zweite Messeinrichtung 7 bei dem dargestellten Ausführungsbeispiel eingerichtet, eine Trockenmessung für eine Trockenprobe durchzuführen, bei der das zu untersuchende Probevolumen 4 nach dem Durchführen einer oder mehrerer Analysereaktionen für die zu analysierende Substanz wieder ausgetrocknet wurde. Die Trockenmessung kann beispielsweise eine Bildaufnahme des Bodens des untersuchten Probevolumens 4 umfassen.

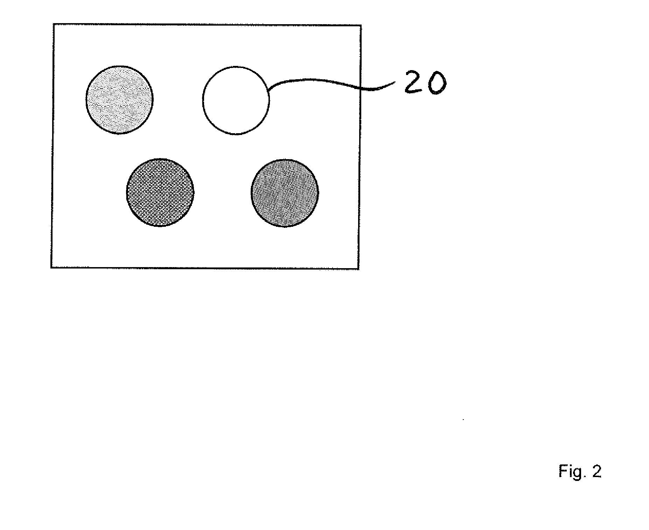

Fig. 2 zeigt eine schematische Darstellung einer solchen Bildaufnahme mit mehreren Messbereichen 20, die aufgrund unterschiedlicher Analysereaktion verschieden gefärbt sind. Diese Bildaufnahme kann dann mit Hilfe einer Auswertesoftware einer Bildanalyse unterzogen werden, um schließlich die Bestimmung der Probe auszuführen. In einer speziellen Ausführung erfolgt die Bildanalyse nach einer vorhergehenden Justierung der Bildaufnahme anhand gleich gefärbter Messbereiche oder anhand von Passermarken oder anderen Markierungen an den Probenvolumen der Probenmatrizen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Probenanalysevorrichtung zum Bestimmen von Proben in einer Probenmatrix mit mehreren Probevolumen, insbesondere in einer Mikrotiterplatte, mit:
- einer Aufnahmeeinrichtung mit einer Aufnahme für eine Probenmatrix, die mehrere Probevolumen aufweist,
- einer ersten Messeinrichtung, die konfiguriert ist, Proben in der Probenmatrix, wenn diese in der Aufnahme angeordnet ist, mittels einer Nass- oder Feuchtmessung zu bestimmen,
- einer zweiten Messeinrichtung, die konfiguriert ist, weitere Proben in der Probenmatrix, die von den Proben verschieden sind, oder in einer anderen Probenmatrix, wenn diese in der Aufnahme angeordnet ist, mittels einer Trockenmessung zu bestimmen, und
- einer Verlagerungseinrichtung, die an die Aufnahmeeinrichtung koppelt und konfiguriert ist, die Aufnahmeeinrichtung zwischen einer Ladestellung und mehreren Messstellungen zu verlagern, derart, dass die Aufnahme in verschiedene Messstellungen verlagerbar ist, die entweder der ersten oder der zweiten Messeinrichtung zugeordnet sind.

2. Probenanalysevorrichtung nach Anspruch 1, **dadurch gekennzeichnet, dass** die erste und / oder die zweite Messeinrichtung als eine optische Messeinrichtung gebildet sind.

3. Probenanalysevorrichtung nach Anspruch 1 oder 2, **dadurch gekennzeichnet, dass** die Verlagerungseinrichtung konfiguriert ist, innerhalb einer Matrixanordnung von Probenvolumen, die bei der Probenmatrix und / oder bei der anderen Probenmatrix gebildet ist, für eine erste Gruppe von Probevolumen Messstellungen, die der Nass- oder Feuchtmessung mit der ersten Messeinrichtung zugeordnet sind, und für eine zweite Gruppe von Probenvolumen, die von der ersten Gruppe von Probevolumen verschieden ist, andere Messstellungen anzufahren, die der Trockenmessung mit der zweiten Messeinrichtung zugeordnet sind.

4. Probenanalysevorrichtung nach mindestens einem der vorangehenden Ansprüche, **dadurch gekennzeichnet, dass** die Verlagerungseinrichtung mit einer x-y-Verlagerungseinheit gebildet ist.

5. Probenanalysevorrichtung nach mindestens einem der vorangehenden Ansprüche, **gekennzeichnet durch** eine Ausleseeinrichtung, die konfiguriert ist, Nutzungsinformationen von einem Informationsspeicher auf der Probenmatrix kontaktlos auszulesen.

6. Probenanalysevorrichtung nach Anspruch 5, **gekennzeichnet durch** eine Prüfeinrichtung, die an die Ausleseeinrichtung funktionell koppelt und konfiguriert ist, die ausgelesenen Nutzungsinformationen auszuwerten, derart, dass das Bestimmen von Proben der Probenmatrix unterbunden wird, wenn beim Auswerten der Nutzungsinformationen festgestellt wird, dass es sich um eine nicht zugelassene Probenmatrix handelt.

7. Probenanalysevorrichtung nach Anspruch 5 oder 6, **gekennzeichnet durch** eine Messsteuereinrichtung, die an die Ausleseeinrichtung sowie die erste und / oder die zweite Messeinrichtung funktionell koppelt und konfiguriert ist, die ausgelesenen Nutzungsinformationen auszuwerten, derart, dass das Bestimmen der Proben in der Probenmatrix mittels der ersten und / oder der zweiten Messeinrichtung Messregimeinformationen entsprechend ausgeführt wird, die von der Messsteuereinrichtung aus den ausgelesenen Nutzungsinformationen abgeleitet werden.

8. Probenanalysevorrichtung nach mindestens einem der vorangehenden Ansprüche, **gekennzeichnet durch** eine Messprüfeinrichtung, die an die erste und / oder die zweite Messeinrichtung funktionell koppelt und konfiguriert ist, vor, während und / oder nach der Nass- oder Feuchtmessung mit der ersten Messeinrichtung und / oder der Trockenmessung mit der zweiten Messeinrichtung zu prüfen, ob eine aktuell bestimmte Probe für die jeweilige Messart zugelassen ist.

9. Verfahren zum Bestimmen von Proben in einer oder mehreren Probenmatrizen, die jeweils mit mehreren Probevolumen gebildet sind, in einer Probenanalysevorrichtung, insbesondere einer Probenanalysevorrichtung nach mindestens einem der vorangehenden Ansprüche, wobei das Verfahren die folgenden Schritte aufweist:
- Beladen einer Aufnahmeeinrichtung mit einer Aufnahme in einer Ladestellung mit einer Probenmatrix, die mehrere Probevolumen aufweist,
- Verlagern der Aufnahmeeinrichtung mit der Probenmatrix in der Aufnahme mittels einer Verlagerungseinrichtung in erste Messstellungen, die einer ersten Messeinrichtung zugeordnet sind,
- Bestimmen von Proben in der Probenmatrix in einer Nass- oder Feuchtmessung mittels der ersten Messeinrichtung in den ersten Messstellungen,
- Verlagern der Aufnahmeeinrichtung mit der Probenmatrix in der Aufnahme mittels der Verlagerungseinrichtung in zweite Messstellungen, die einer zweiten Messeinrichtung zugeordnet sind, die von der ersten Messeinrichtung verschieden ist, und
- Bestimmen von weiteren Proben, die von den Proben verschieden sind, in der Probenmatrix oder in einer anderen, nachträglich und wahlweise anstelle der Probenmatrix in der Aufnahme angeordneten Probenmatrix in einer Trockenmessung mittels der zweiten Messeinrichtung in den zweiten Messstellungen,

10. Verfahren nach Anspruch 9, **dadurch gekennzeichnet, dass** bei der Nass- oder Feuchtmessung mittels der ersten Messeinrichtung und / oder bei der Trockenmessung mittels der zweiten Messeinrichtung wenigstens ein Analyseparameter aus der folgenden Gruppe bestimmt wird: Autoantikörper, Antikörper gegen Infektionserreger und Antigene von Infektionserregern.
